# EUROPEAN PATENT APPLICATION

(11) **EP 1 398 708 A1**
(43) Date of publication of application: **17.03.2004**
(21) Application number: 02736152.6
(22) Date of filing: 18.06.2002
(51) Int. Cl.: G06F 17/21, G06F 17/60, H04L 9/32, G06F 12/14

(54) **ELECTRONIC DOCUMENT FORMAT CONTROL APPARATUS AND METHOD**

(30) Priority: 19.06.2001 JP 2001184410
(71) Applicant: FUJI XEROX CO., LTD, Minato-ku Tokyo 107-0052 (JP)
(72) Inventor: INADA, Ryu, Kawasaki-shi, Kanagawa 213-8508 (JP); AOKI, Ryuichi, Fuji Xerox Co., Ltd., Tokyo 164-0012 (JP)
(74) Representative: Goddar, Heinz J., Dr.
(86) International application number: PCT/JP2002/006050
(87) International publication number: WO 2003/007180

(57) **Abstract**

In a system for managing electronic document formats, a format issuing agency uses a signature calculating unit to add a digital signature to format data for an electronic document and transmits the data to a format certificate authority. The format certificate authority generates an attribute certificate and transmits the certificate back to the format issuing agency. The format issuing agency stores all data related to the format in a database. A client terminal receives format data from the format issuing agency, inputs details into the form, and affixes a signature and the like. The recipient of the electronic document verifies the digital signatures of the document author and issuing agency, confirms the attribute certificate from the format certificate authority, and contacts the format certificate authority with any additional inquiries.

## Description

### TECHNICAL FIELD

The present invention relates to a technique for managing document formats, and particularly to one enabling the recipient of the document (document user) to confirm the formats required for individual documents.

### BACKGROUND ART

Today many types of documents, including documents of authorization and correspondence, are being created in an electronic form. Although in general many advantages can be gained by digitizing documents, digitization facilitates the falsification of documents and other problems. It is therefore essential to be able to confirm the authenticity of documents of authorization and the like through a record of the process implemented to approve such documents. Digital signatures and other technologies have been developed to prevent the reproduction and falsification of documents. By affixing digital signatures to documents requiring a record of authenticity, the signature guarantees that the contents of the document have not been falsified.

However, in conventional technologies it has not been possible to guarantee the authenticity of the format/form required for documents of authorization. For example, if Mr. A digitally signs a prescribed document of authorization, but an ill-intentioned Mr. B subsequently erases Mr. A's digital signature, tampers with the contents, and transmits the document to Mr. C under Mr. A's name, then Mr. C cannot verify whether the format of the document of authorization requires a digital signature. Hence, there is a chance that Mr. C will be deceived by Mr. B.

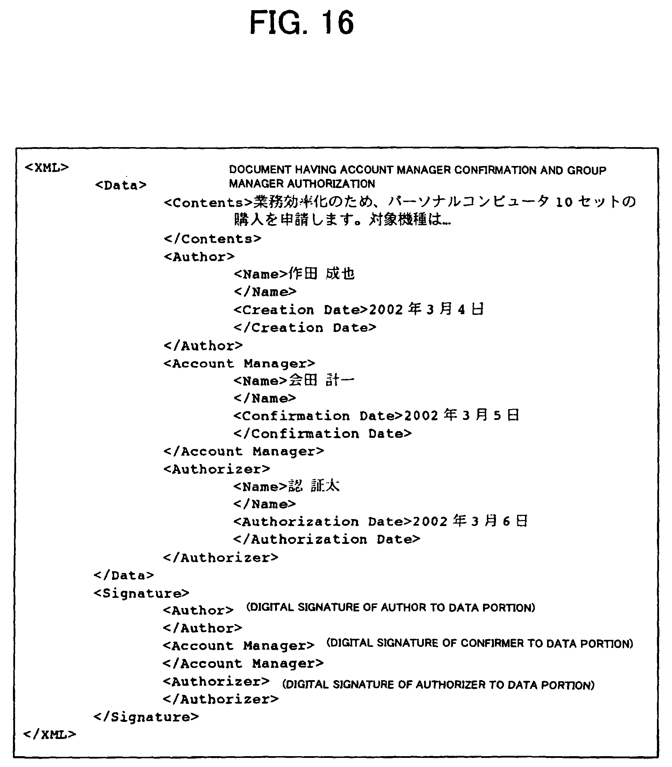

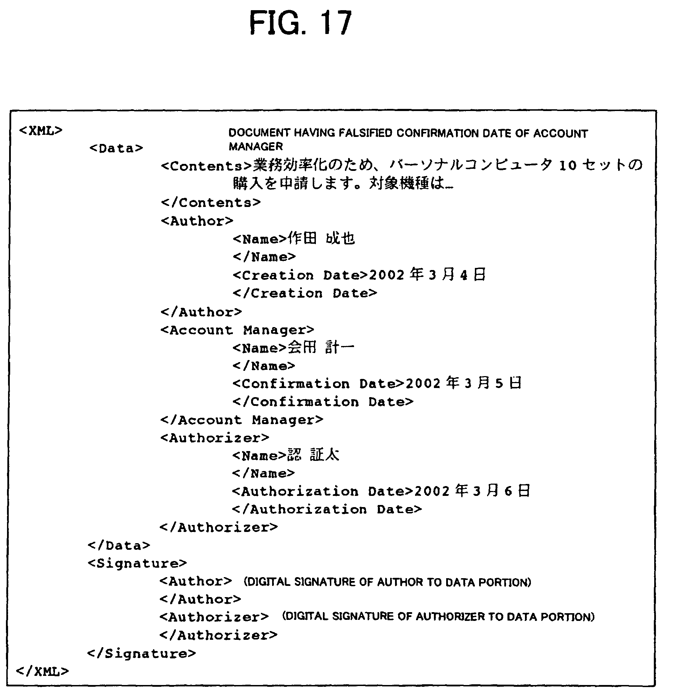

Next, this problematic point will be described using a more detailed example. Fig. 16 shows a description of entries in an application form used when requesting the purchase of goods. It is assumed here that the application process involves an applicant (author) creating the application form, after which the account manager verifies the estimated cost, and a supervisor (authorizer) authorizes the purchase. In this example, digital signatures for the account manager and authorizer are affixed to the document. The authenticity of the document can be verified by examining these digital signatures using public key certificates for the account manager and the authorizer. However, the process of authorization required for this type of application form cannot be understood from the description of entries in the document. One cannot tell, for example, whether the digital signature of the account manager is required. Hence, it is possible to create an application such as that shown in Fig. 17, in which the confirmation date of the account manager (proof of confirmation) has been falsified without the account manager's knowledge. Since the description of entries in the forged application shown in Fig. 17 do not indicate whether the digital signature of the account manager is required, the document may be mistaken as authentic, provided the document includes the signatures of the applicant (author) and authorizer. In other words, it is impossible to detect the above falsification.

### SUMMARY OF THE INVENTION

In view of the foregoing, it is an object of the present invention to provide a device and method for managing electronic document formats capable of preventing the recipient of the document from being deceived regarding the document's required format.

This object and others will be described based on the construction described in the accompanying claims. Next, an embodiment of the present invention will be described. In this embodiment of the present invention, a form or format accounting for digital signatures and the like is created and submitted to a format certificate authority for certifying the form. This form stipulates whether digital signatures are necessary, what organization or individual is required to affix a digital signature, and the like.

The format of the document itself is described using the eXtensible Markup Language (XML) or the like. Much progress has been made in standardizing XML and in its support for digital signatures. The persons attempting to register the format of the document (the creator or manager of the format) generate digital signatures and attach the data representing these signatures to the document format itself.

The above-described data is sent to a certificate authority or agency established to guarantee document formats. The authority adds to it the time of reception, a digital signature for the format, and a unique ID created by the certificate authority itself and issues a certificate of an attribute certificate form to the applicant.

The author of a document attaches this attribute certificate and format to their electronic document. When verification of the document is necessary, an application program for processing the electronic document can perform the following:
1. Verify the format (by verifying digital signatures included in the format itself)
2. Confirm that the certificate authority has attached its guarantee based on the digital signature of the authority that issued the attribute certificate (format certificate authority)
3. Compare an electronic document to the original preserved in the format certificate authority by querying the authority that issued the attribute certificate (format certificate authority; optional)
4. Query the certificate authority regarding whether the format has been updated (optional)
5. Query an authority at which the format was valid (optional)

The user of the format can perform the following verifications according to need:
(a) Verify whether a digital signature was applied according to the format intended by the issuer (2, 3)
(b) Verify whether the format was the most recent version at the time of the signature request and signature verification (4)
(c) Verify whether the format was valid for older documents at the time the document was issued (5)

Verification (a) is primarily used when the recipient need not append a digital signature and only wishes to know the result of a digital signature affixed to for example the notification of a managerial decision, or the like case (for example, notification of a managerial decision, an authorized purchase request, or other authorized document with which some request is to be made for some action).

Verification (b) is used when checking the contents of a document undergoing authorization (for example, a request for managerial decision being reviewed) and affixing one' s own digital signature, or when defining the work process in groupware or the like.

Verification (c) is used when saving documents (contracts) that must be retained for a fixed period to verify whether the contents are correct while referring to results of past decisions and past contracts.

Application programs conforming to this method can be provided in the form of a digital signature plug-in.

The document format can regulate the logical structure of mandatory entries, including applicant, date of application, authorizer, date of authorization, and the like, and such mandatory items as signatures, entry number, authorization conditions, and the like. Alternatively, the format may physically restrict the layout or the like. Hence, the document format can regulate any conditions of the document.

To expand on this description, according to one aspect of the present invention, a device for managing electronic document formats includes means for inputting format data for an electronic document; means for generating digital signatures for data related to the electronic document format; electronic document format storing means for storing the format data for an electronic document and the digital signatures for the data related to the electronic document format; and means for outputting the format data for an electronic document and the digital signatures for the data related to the electronic document format stored by the electronic document format storing means when required.

With this construction, data regarding the format is added to the document to make falsification by digital signature impossible, thereby eliminating the risk of the document's recipient being deceived by an altered format.

The above data related to the format of the electronic document can be the format data of the electronic document itself, a description of the electronic document format, or reference data for either of these two.

It is desirable that the electronic document formats be certified by a prescribed certificate authority. The certificate authority keeps custody of the verification data and can provide the user with data regarding the document's validity, conditions for invalidation, updated versions, and the like. The certificate authority certifies the document format by affixing a digital signature to the electronic document format. Certification may also be performed using an attribute certificate.

When certifying a document format, the certificate authority can affix a digital signature to the format data, which is the object of certification, or can affix a digital signature to identification data that can uniquely identify the format data by a reception identifier or the like.

In addition to a device or system, the present invention can also be implemented by a method. A portion of this method can be implemented with a computer program.

These aspects of the present invention and others will be described in more detail below with reference to the accompanying drawings and within the scope of the attached claims.

### BRIEF DESCRIPTION OF THE DRAWINGS

In the drawings:
Fig. 1 is a block diagram showing the overall construction of an electronic document format management system according to the preferred embodiment of the present invention;
Fig. 2 is a flowchart showing a portion of the steps in a process executed by the format issuing agency according to the preferred embodiment;
Fig. 3 is a flowchart showing the steps in the process executed by the format certificate authority according to the preferred embodiment;
Fig. 4 is a flowchart showing the another portion of the steps in the process executed by the format issuing agency according to the preferred embodiment;
Fig. 5 is a flowchart showing the steps in a process for creating a document using a format provided according to the preferred embodiment;
Fig. 6 is a flowchart showing the steps in a process for verifying the format of a document created in the preferred embodiment;
Fig. 7 is an explanatory diagram showing the configuration of format data managed by the format issuing agency;
Fig. 8 is an explanatory diagram showing the configuration of a document created using the format data of the preferred embodiment;
Fig. 9 is an explanatory diagram showing an example of format data according to the preferred embodiment;
Figs. 10A and 10B are explanatory diagrams showing an example document created, confirmed, and authorized based on the format data in Fig. 9;
Figs. 11A and 11B are explanatory diagrams showing a portion of falsified data in the document illustrated in Figs. 10A and 10B;

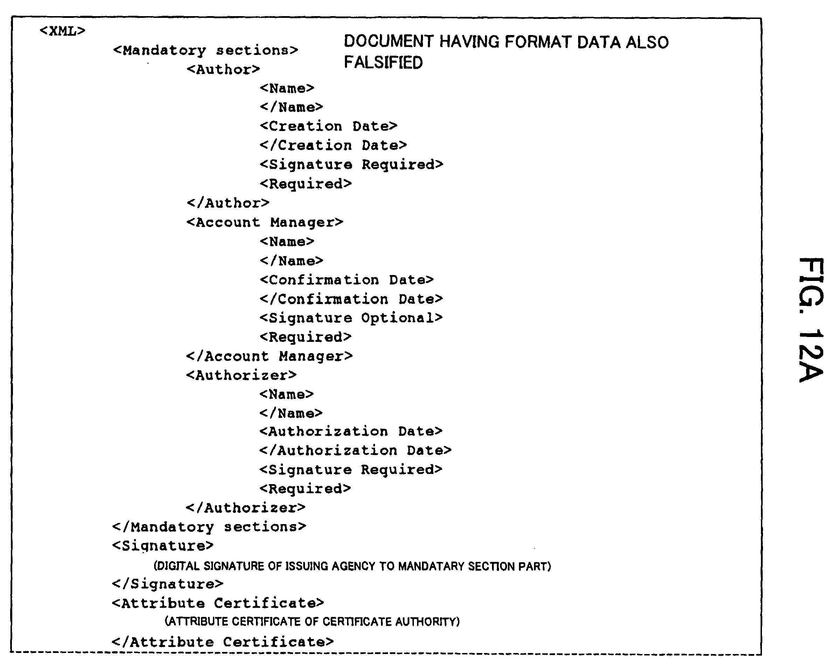

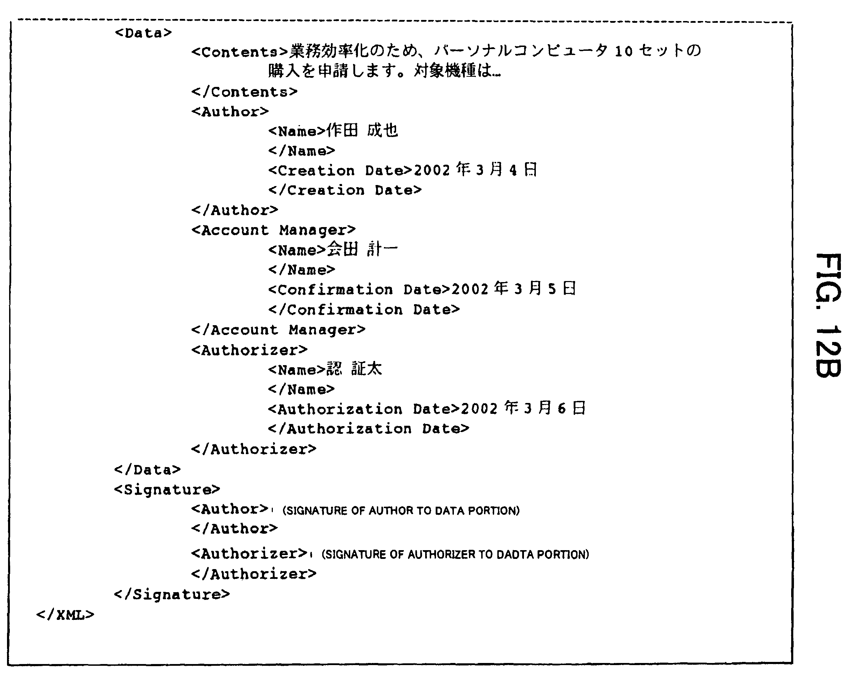

Figs. 12A and 12B are explanatory diagrams showing a portion of altered format data in addition to the portion of falsified data in the document illustrated in Figs. 10A and 10B;
Fig. 13 is an explanatory diagram showing an example of format data that can be referenced based on a reference code;
Fig. 14 is an explanatory diagram showing a document that has been created, confirmed, and authorized by referencing the format data in Fig. 13;
Fig. 15 is an explanatory diagram showing a portion of falsified data in the document of Fig. 14;
Fig. 16 is an explanatory diagram showing a document based on a prescribed format; and
Fig. 17 is an explanatory diagram showing an example of alterations made to the document of Fig. 16.

### BEST MODE FOR CARRYING OUT THE INVENTION

A preferred embodiment of the present invention will be described below.

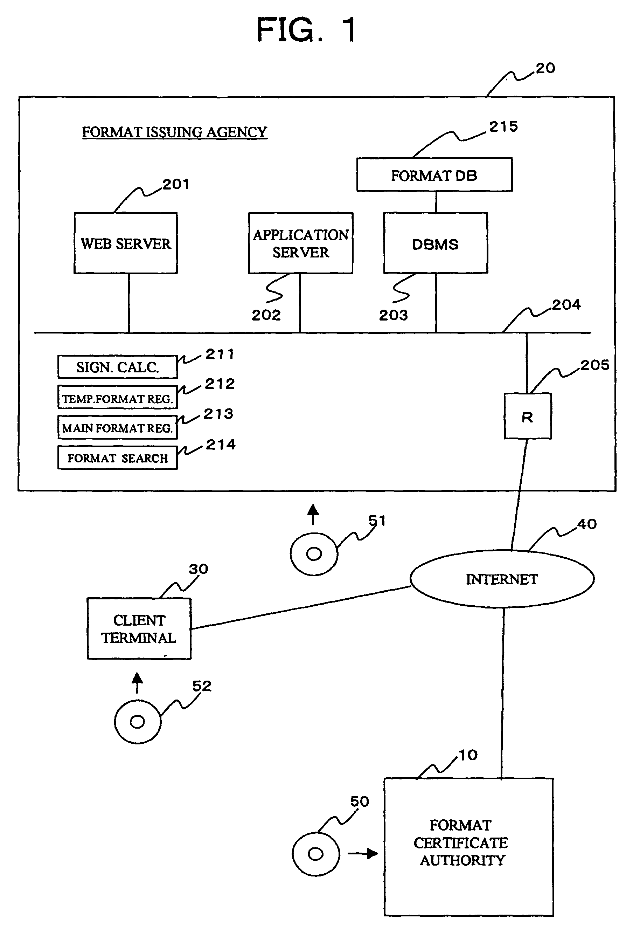

Fig. 1 shows an electronic document format management system according to a preferred embodiment of the present invention, and in this figure, the system comprises a format certificate authority 10, a format issuing agency 20, a client terminal 30, and the like, all connected via a communication network 40, such as the Internet. The electronic document format management system according to the preferred embodiment provides a format in response to requests from the client terminal 30. The format of electronic documents managed by the issuing agency 20 can be an existing standard format created by the issuing agency 20 or a specific format author, or a format specific to a registered user according to a request from the user of the client terminal 30. The certificate authority 10 serves to certify the formats issued by the issuing agency 20 and, in the present embodiment, issues an attribute certificate to certify the format. Naturally any method can be used, provided that a digital signature is affixed to the document to certify the format. For example, digital signatures can be applied using XML's detached, enveloped, or enveloping signature method. The certificate authority 10 can also perform the functions of the issuing agency 20.

The issuing agency 20 includes, for example, a web server 201, an application server 202, and a database management system 203 all connected to a LAN 204. The LAN 204 connects to the communication network 40 via a router 205. The web server 201 provides a user interface with the client terminal 30.

The issuing agency 20 serves to store and manage electronic document formats. Upon receiving a request from the client terminal 30, the issuing agency 20 provides an electronic document format to the client terminal 30 via the communication network 40.

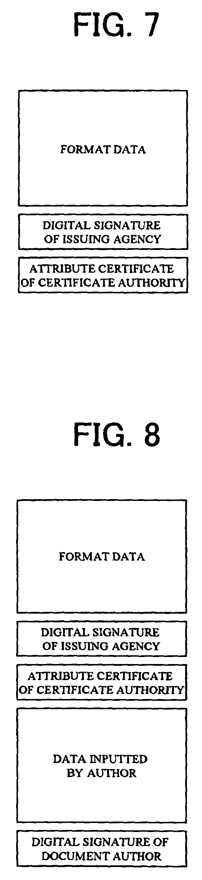

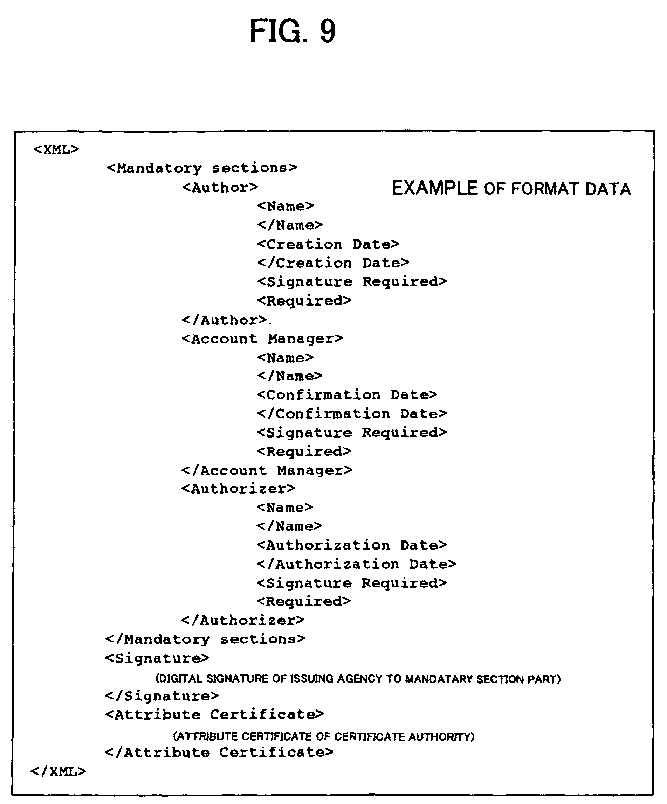

An entry for an electronic document format includes, as in the example of Fig. 7, data for the electronic document format, a digital signature of the issuing agency 20, an attribute certificate issued by the certificate authority 10, and the like. Data for the electronic document format stipulates the appearance of the document (size, ruled lines, and the like), essential items (required content), and essential procedures (affixing a digital signature). A more detailed example of format data will be described below based on Fig. 9. The database management system 203 stores and manages format entries in a format database 215.

The application server 202 in the issuing agency 20 executes various services for the issuing agency 20. For example, the application server 202 functions as a signature calculating unit 211, a temporary format registering unit 212, a main format registering unit 213, a format searching unit 214, and the like.

The certificate authority 10 issues attribute certificates for format entries stored and managed by the issuing agency 20 and also stores and manages attribute certificates. The certificate authority 10 provides the client terminal 30 with information on the content, authenticity, period of validity, and the like of attribute certificates upon request. For this reason, the certificate authority 10 has the same type of web server and the like as the issuing agency 20.

Exchanges between the issuing agency 20 and certificate authority 10 (requesting and issuing attribute certificates) can be performed over a prescribed dedicated line.

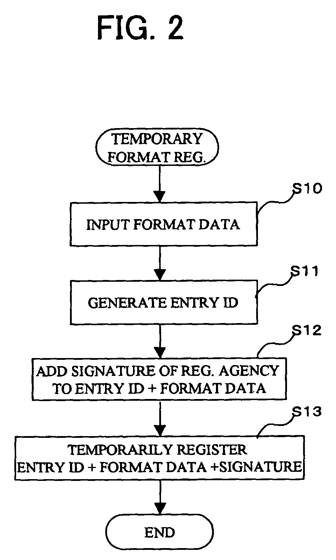

Fig. 2 is a flowchart showing steps in a process executed by the issuing agency 20 to temporarily register a document format. As shown in Fig. 2, format data is inputted into the issuing agency 20 in S10. The inputted format data can be issued from the client terminal 30. In S11 a unique entry number is assigned to the format data entry. An identifier indicating the source of the format data, such as whether the data was prepared independently by the issuing agency 20, prepared by an outside vendor, received from the client terminal 30, or the like can be attached to the entry number. In S12 the digital signature of the issuing agency 20 is calculated by the signature calculating unit 211 and applied to the combination including the entry identifier and format data. In S13, the data set including the entry identifier, format data, and signature is temporarily registered in a prescribed storage area.

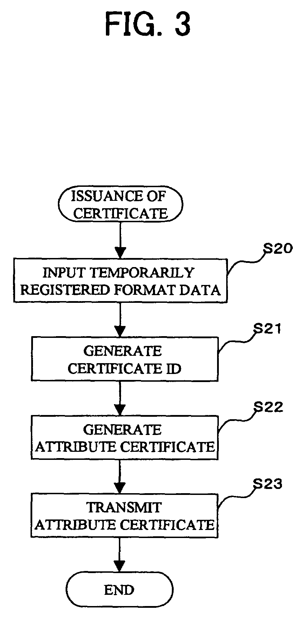

Fig. 3 shows steps in a process executed by the certificate authority 10 to issue an attribute certificate. After a format has been temporarily stored according to the process of Fig. 2, the issuing agency 20 requests the certificate authority 10 to issue an attribute certificate certifying the content of the format. As shown in Fig. 3, the client terminal 30 receives data for a temporarily registered format from the issuing agency 20 in S20. The certificate authority 10 generates a certificate identifier in S21, generates an attribute certificate in S22, and sends the certificate to the issuing agency 10 in S23. The attribute certificate is based on the X.509 certificate system. Data concerning the format is certified by the digital signature of the certificate authority 10. The attribute certificate is sent to the issuing agency 20 along with the format data. The client terminal 30 can simply send the attribute certificate alone when the format issuing agency 20 can identify the attribute certificate without the format data.

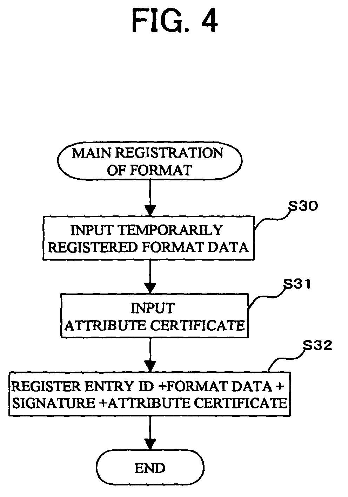

Fig. 4 shows the steps in the main format registration process executed by the issuing agency 20. The issuing agency 20 executes this main registration process after receiving the attribute certificate sent from the certificate authority 10 in the process of Fig. 3. As shown in Fig. 4, the issuing agency 20 receives data for the temporarily registered format in S30 and also the attribute certificate corresponding to this data in S31. All of this data is recorded in the format database 215 in 532.

The client terminal 30 can extract format data from the issuing agency 20 via the communication network 40. The client terminal 30 extracts desired format data using the format searching unit 214 of the issuing agency 20 by inputting the type of format, period of validity, owner (author), and the like.

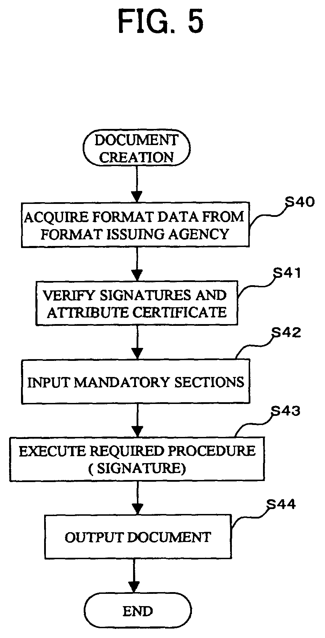

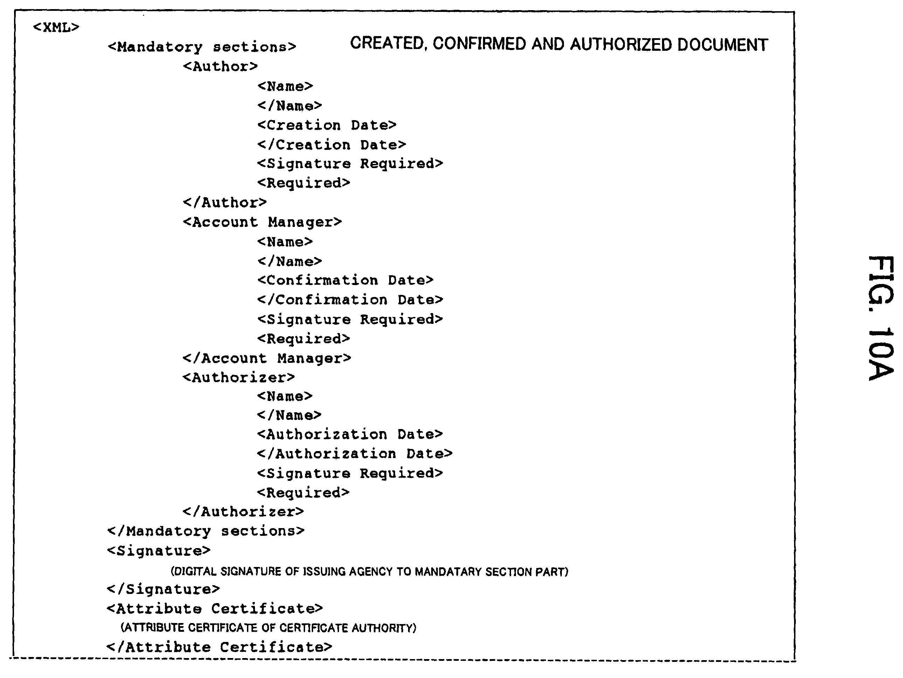

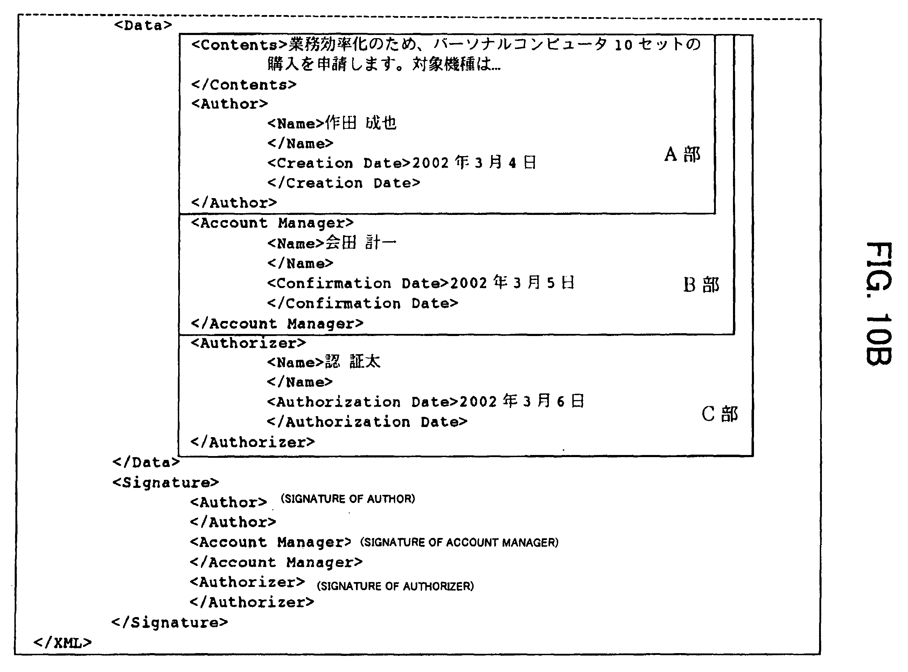

The user of the client terminal 30 uses a prescribed document processing application or the like to input data into the extracted format data, the process of which is shown in Fig. 5. In S40 of Fig. 5, the client terminal 30 extracts format data from the issuing agency 20. At this time, the user can verify the signature of the issuing agency 20 in S41 using a public key certificate for the issuing agency 20 or verify the content of the form using the public key certificate of the certificate authority 10 and the attribute certificate described above. After verification, the user inputs required items in S42 and a digital signature in S43 according to the format data. The final appearance of the electronic document created by the user is similar to that shown in Fig. 8. In S44, the electronic document is outputted to the intended recipient. The digital signature of the author can also be included in a portion of the document. A detailed example of the authorization process and the like performed by the authorizer after the entire process described above is completed will be described later with reference to Figs. 10A and 10B.

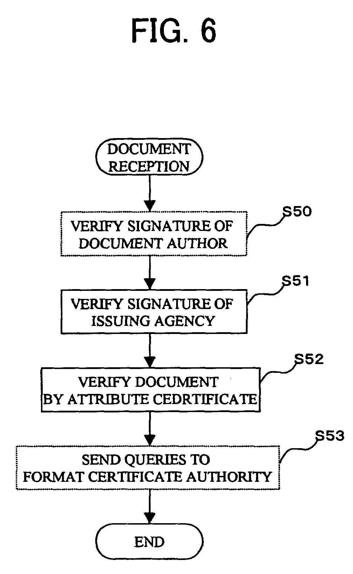

Fig. 6 shows steps in the process executed by the recipient of the electronic document created by the user. As shown in Fig. 6, according to need the recipient can verify the signature of the document author in S50, confirm the authenticity of the format according to the digital signature of the issuing agency 20 in S51, further verify the authenticity based on the attribute certificate in S52, or acquire data from the certificate authority 10 in S53 indicating the validity of the document and whether or not a newer version exists.

In order to execute the processes shown in Figs. 3-6 and other required processes at the certificate authority 10, issuing agency 20, and client terminal 30, computer programs are installed via storage media 50, 51, and 52, or via a communication network, on prescribed computer systems provided in the certificate authority 10, issuing agency 20, and client terminal 30.

Next, a more detailed example will be described. Fig. 9 shows example format data for a document used to request the purchase of goods or the like. In the presumed process for this document, the author creates the document; the account manager confirms the estimated costs; and the authorizer subsequently authorizes the purchase. In this example, requirements are listed in the "Mandatory sections," wherein required details are specified for the author, account manager, and authorizer. "Signature required" indicates that the digital signatures of the account manager and authorizer are required in this document. The digital signature of the issuing agency is added to the format data of the document, as is the attribute certificate from the certificate authority.

A document that has been created, confirmed, and authorized according to the process described above is shown in Figs. 10A and 10B. In this example, the contents of the application are concatenated onto the document format data of Fig. 9. In addition, digital signatures of the account manager and authorizer are affixed to the document. Various configurations can be employed, wherein the digital placement of the digital signatures and the like for the author, account manager, and authorizer depends on the method of creating the form and the verification program. For example, the author, account manager, and authorizer can generate digital signatures for sections A, B, and C, respectively, in Fig. 10B; or the author can generate a digital signature in the "Contents" section and "Author" section, the account manager in the "Contents" section and "Account Manager" section, and the authorizer in the "Contents" section and "Authorizer" section.

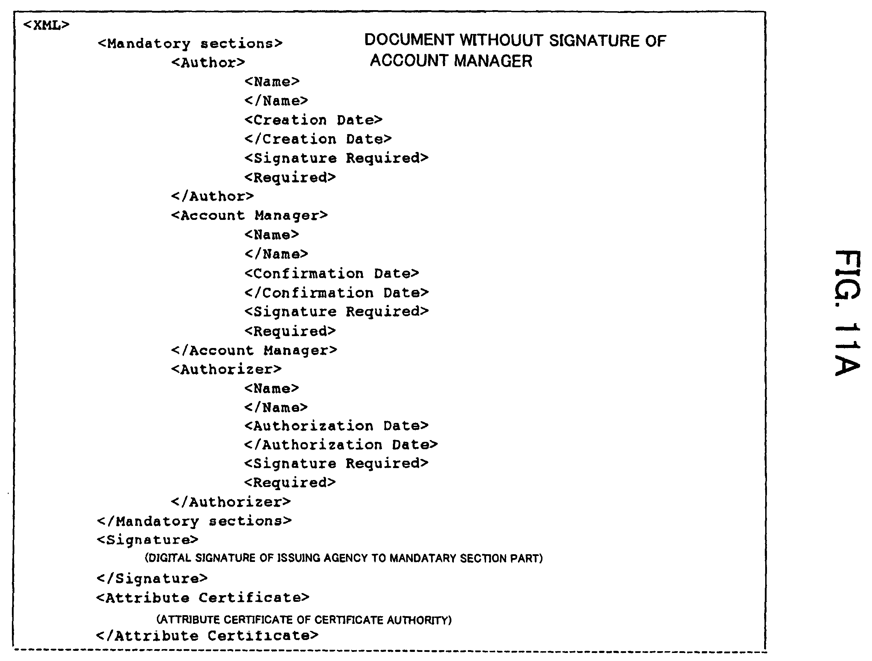

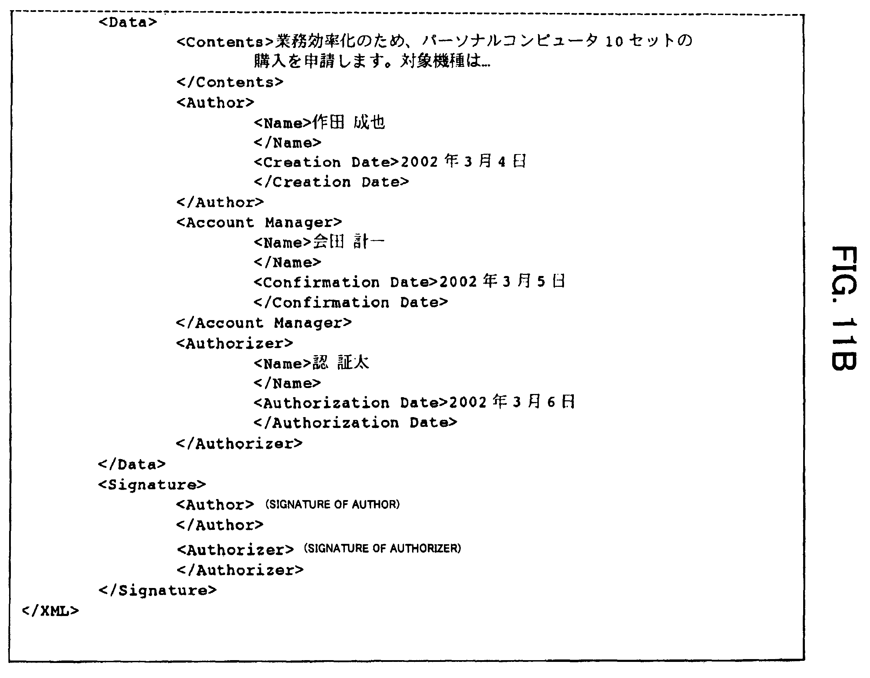

Any falsifications can be detected in the above example. In the example document of Fig. 17, it is conceivable that the confirmation date of the account manager could be falsified when there is no signature for the account manager. However, if the same irregularity were attempted in the document of Figs. 10A and 10B, the result would be similar to that shown in Figs. 11A and 11B. First the recipient verifies that the digital signature of the issuing agency for the "Mandatory sections" and the attribute certificate of the certificate authority are correct. Then, by checking the "Data" section, the recipient can confirm whether requirements in the "Mandatory sections" have been satisfied. When checking the "Data" section, the recipient detects that the stipulation requiring the account manager's signature has not been met. Hence, the recipient discovers the irregularity.

Now let's consider a case when the description in the "Mandatory sections" is altered along with the falsification of data. Here, the confirmation date for the account manager has been altered, and the signature for the account manager has not been included. In addition, the "Signature Required" description listed for the account manager in the "Mandatory sections" has been altered to "Signature Optional." In this case, by verifying the digital signature for the issuing agency of the "Mandatory sections" and the attribute certificate of the certificate authority, the dishonesty is found by detecting that the "Mandatory sections" has been altered.

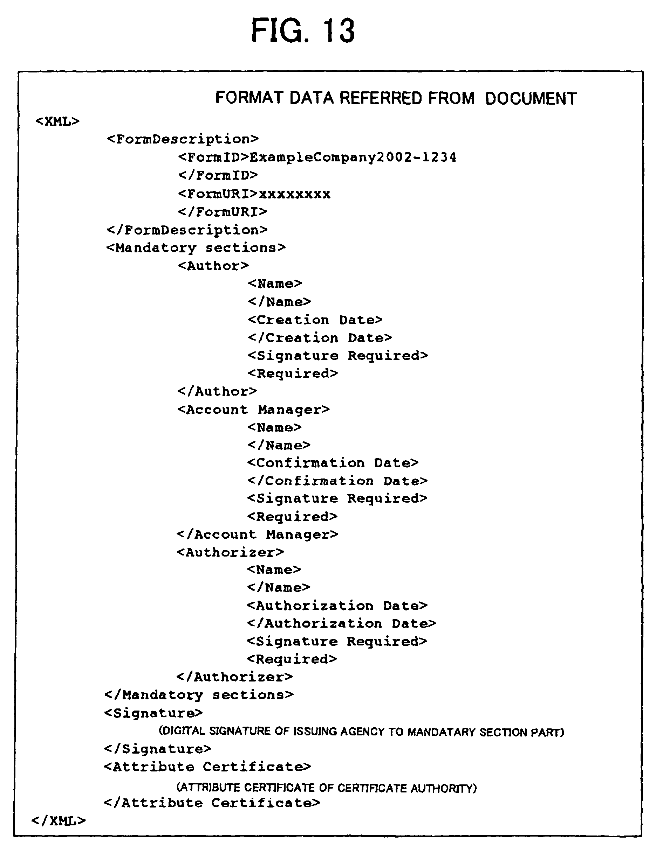

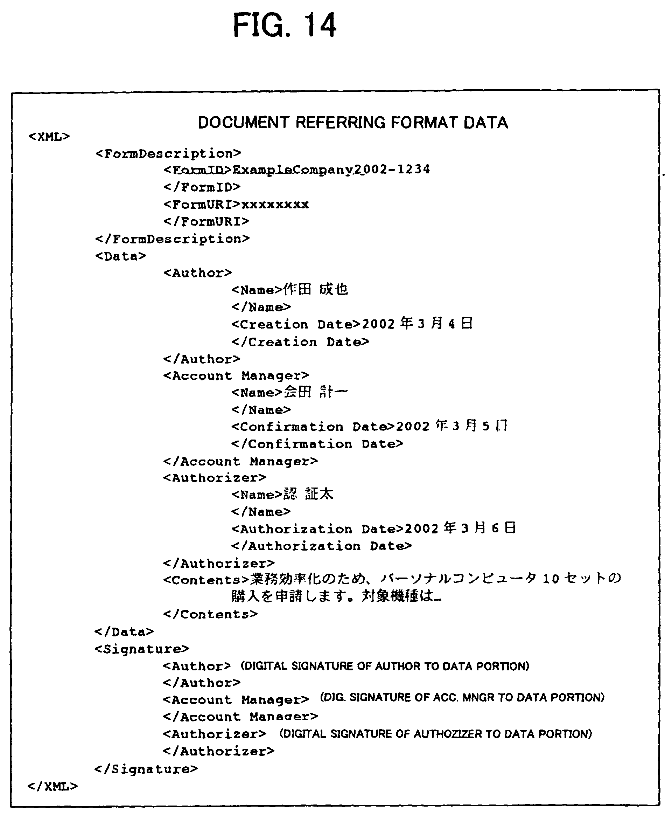

Next, an example of processing a document while referring to registered format data will be described. Fig. 13 shows an example of registered format data. This format data can be acquired via the network by specifying the name "URI," for example. In this example, the format data is stored on a file server. The format identifier is specified by the "FormID," which in this example is "ExampleCompany2002-1234." Fig. 14 shows a document after being created, confirmed, and authorized. To verify the document format, format data is acquired based on the specification "FormURI." "URI" alone can also be used as the ID of the format data.

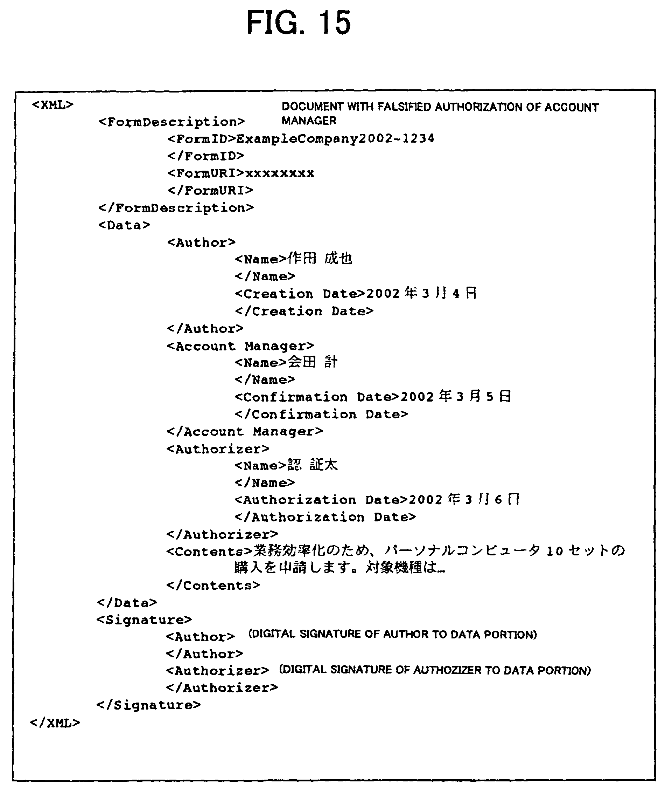

Fig. 15 shows the document in which the confirmation date of the account manager has been falsified. Naturally, the signature for the account manager is missing. In this case, the request for the format data is first verified. Subsequently, it is determined whether the document conforms to the specifications in the format data. The irregularity is discovered after determining that the signature of the account manager is required but is missing from the document.

In the preferred embodiment described above, the present invention can confirm the authenticity of an electronic document format based on the digital signatures of the format author (format manager) and a third party certificate authority, and can avoid fraudulence caused by falsification of the data format. Hence, the present invention can provide a convenient environment for the circulation of electronic documents that can ensure high reliability in the issuing and managing of electronic document formats.

## Claims

1. An electronic document format management system comprising:
means for inputting format data for an electronic document;
means for generating digital signatures for data related to the electronic document format;
electronic document format storing means for storing the format data for an electronic document and the digital signatures for the data related to the electronic document format; and
means for outputting, when required, the format data for an electronic document and the digital signatures for the data related to the electronic document format stored by the electronic document format storing means.

2. An electronic document format management system comprising:
electronic document format storing means for storing format data for an electronic document in association with a digital signature for data related to the electronic document format; and
means for outputting, when required, the format data for an electronic document and the digital signatures for the data related to the electronic document format stored by the electronic document format storing means.

3. An electronic document format management system as recited in Claim 1, wherein the data related to the electronic document format is the electronic document format data itself.

4. An electronic document format management system as recited in Claim 1, wherein the data related to the electronic document format is a description of the format data.

5. An electronic document format management system as recited in Claim 1, wherein the data related to the electronic document format is reference data for the electronic document format or a description of the electronic document format.

6. An electronic document format management system as recited in Claim 1, wherein the electronic document format storing means further stores an attribute certificate for certifying the electronic document format.

7. An electronic document format certifying system comprising:
means for inputting data related to an electronic document format;
means for generating a unique reception identifier;
means for generating an attribute certificate using the data related to the electronic document format and the reception identifier; and
means for storing the attribute certificate.

8. An electronic document format certifying system comprising:
means for inputting data related to an electronic document format;
means for generating a unique reception identifier;
means for generating a digital signature for the data related to the electronic document format and the reception identifier; and
means for storing the data related to the electronic document format, the reception identifier, and the digital signature.

9. An electronic document outputting system comprising:
means for creating an electronic document according to operations by a document author;
means for associating data related to an electronic document format to the electronic document; and
means for outputting the electronic document associated with the data related to the electronic document format.

10. An electronic document outputting system as recited in Claim 9 and used in conjunction with a electronic document format management system comprising:
means for inputting format data for an electronic document;
means for generating digital signatures for data related to the electronic document format;
electronic document format storing means for storing the format data for an electronic document and the digital signatures for the data related to the electronic document format; and
means for outputting, when required, the format data for an electronic document and the digital signatures for the data related to the electronic document format stored by the electronic document format storing means;
whereby the data related to the electronic document format with affixed digital signature outputted from the electronic document format management system is associated with the electronic document.

11. An electronic document outputting system comprising:
means for creating an electronic document according to operations by a document author;
means for associating data related to an electronic document format to the electronic document;
means for generating a digital signature of the document author for electronic documents associated with the data related to the electronic document format; and
means for outputting the electronic document associated with the data related to the electronic document format and the digital signature of the document author.

12. An electronic document display system comprising:
means for receiving an electronic document associated with data related to an electronic document format that includes a digital signature;
means for verifying the digital signature; and
means for displaying the electronic document format based on the data related to the electronic document.

13. An electronic document format management method comprising the steps of:
inputting format data for an electronic document;
generating digital signatures for data related to the electronic document format;
storing the format data for an electronic document and the digital signatures for the data related to the electronic document format; and
outputting, when required, the format data for an electronic document and the digital signatures for the data related to the electronic document format stored in the step of storing the electronic document format.

14. An electronic document format management method as recited in Claim 13, wherein the electronic document format storing step further stores an attribute certificate for the electronic document format.

15. A storage medium that can be read by a computer and stores a computer program for managing electronic document formats comprising:
means for inputting format data for an electronic document;
means for generating digital signatures for data related to the electronic document format;
electronic document format storing means for storing the format data for an electronic document and the digital signatures for the data related to the electronic document format; and
means for outputting, when required, the format data for an electronic document and the digital signatures for the data related to the electronic document format stored by the electronic document format storing means.
